# EUROPÄISCHE PATENTSCHRIFT

(11) **EP 2 052 910 B1**
(45) Veröffentlichungstag und Bekanntmachung des Hinweises auf die Patenterteilung: **02.10.2019**
(21) Anmeldenummer: 08167479.8
(22) Anmeldetag: 24.10.2008
(51) Int. Cl.: B60Q 1/08

(54) **Anordnung zum Steuern und/oder Regeln der Hell-Dunkel-Grenze bei Kraftfahrzeugscheinwerfern**
Assembly to control and/or regulate the beam cut-off of motor vehicle headlamps
Agencement destiné à la commande et/ou au réglage de la coupure d'un faisceau de phares de véhicules automobiles

(30) Priorität: 26.10.2007 DE 102007051271
(43) Veröffentlichungstag der Anmeldung: 29.04.2009
(73) Patentinhaber: HELLA GmbH & Co. KGaA, 59552 Lippstadt (DE)
(72) Erfinder: Gödecker, Reiner, 59558 Lippstadt (DE); Könning, Thomas, 48703 Stadtlohn (DE); Röttinger, Axel, 59597 Erwitte (DE); Schwarz, Sergej, 70825, Korntal-Münchingen (DE)

(56) Entgegenhaltungen:
- EP-A1- 0 642 950
- EP-A2- 0 869 031
- DE-A1- 10 115 808
- DE-A1- 19 653 662

## Beschreibung

Die Erfindung betrifft eine Anordnung zum Steuern und/oder Regeln der Hell-Dunkel-Grenze bei Kraftfahrzeugscheinwerfern mit mindestens einem Bilderfassungs- und Bildverarbeitungsmittel, das zum Aufnehmen eines Bildes einer vor dem Fahrzeug liegenden Verkehrssituation, insbesondere der Beleuchtungssituation einschließlich der Scheinwerfer von entgegenkommenden und der Rückleuchten vorrausfahrender Fahrzeuge" geeignet und eingerichtet ist, und mit einem Steuer- oder Regelmittel, das zum Erzeugen von Stellsignalen an ein Stellmittel zum Einstellen der Hell-Dunkel-Grenze des Kraftfahrzeugscheinwerfers geeignet und eingerichtet ist.

Es sind verschiedene Druckschriften bekannt, die sich mit der automatischen Einstellung der Hell-Dunkel-Grenze bei Kraftfahrzeugscheinwerfern beschäftigen. Es seien beispielhaft die Druckschriften EP 0 869 031 A2, DE 43 18 681 A1, EP 0 971 829 B1, DE 10 2004 063 836 A1 und US 6,653,614 B2 genannt. Die bekannten Systeme verwenden oftmals Bilderfassungs- und Verarbeitungsmittel, d. h. Kamerasysteme zur Erfassung der Beleuchtungssituation vordem Kraftfahrzeug. Bei entgegenkommenden Fahrzeugen und vorausfahrenden Fahrzeugen, die anhand ihrer Frontscheinwerfer oder Heckleuchten erkannt werden können, wirken die Anordnungen zum Steuern oder Regeln ein Verschieben der Hell-/Dunkelgrenze so, dass eine Blendung des Fahrzeugführers des entgegenkommenden oder vorausfahrenden Fahrzeugs unterbleibt. Dazu wird im einfachsten Fall der Scheinwerfer abgeblendet, bei komplexeren Systemen ist dagegen die Hell-Dunkel-Grenze stufenlos vertikal verschiebbar.

Probleme können bei den herkömmlichen Anordnungen zum Steuern und/oder Regeln der Hell-Dunkel-Grenze bei Kraftfahrzeugscheinwerfern bei unebenen Fahrbahnbelägen auftreten, wenn das Fahrzeug schnellen Nick- oder Rollbewegungen ausgesetzt ist. Solche Fahrbahnunebenheiten sind insbesondere bei schlechten Fahrbahnzuständen, zum Beispiel beim Auftreten von Schlaglöchern anzutreffen. Das Rollen und insbesondere das Nicken des Fahrzeugs führt dazu, dass die Lichtquellen, die von dem Bilderfassungs- und Verarbeitungssystem erkannt werden, ihre Position in dem erfassten Bild ständig ändern. Dieses erkennen die bekannten Anordnungen zum Steuern oder Regeln als eine Veränderung der Entfernung des vorausfahrenden beziehungsweise entgegenkommenden Fahrzeugs und bewirken eine Neueinstellung der Hell-Dunkel-Grenze der Kraftfahrzeuge. Sofern die Roll- oder Nickbewegungen sehr schnell sind, werden in dem Bild, welches über die Bilderfassungsmittel und Verarbeitungsmittel erfasst und verarbeitet wird, die Lichtquellen nicht mehr als punktförmige Lichtquellen abgebildet. Vielmehr lösen sich die Lichtquellen zu Lichtbändern auf. Das Erkennen und Klassifizieren derartiger Lichtbänder stößt bei den bekannten Anordnungen zum Steuern oder Regeln mitunter auf Schwierigkeiten. In der Regel gehen die bekannten Systeme davon aus, dass die Lichtquelle in der Mitte eines solchen Lichtbandes angeordnet ist. Dieses kann dann dazu führen, dass die Hell-Dunkel-Grenze der Kraftfahrzeugscheinwerfer so eingestellt wird, dass der Fahrzeugführer des entgegenkommenden oder vorausfahrenden Fahrzeugs geblendet wird. Ein weiteres Problem kann bei sehr schnellen Nick- und Rollbewegungen dann auftreten, wenn die systembedingte Verzögerung der Regelung so groß ist, dass die Verschiebung der Hell-Dunkel-Grenze mit einer Nick- und Rollbewegung zusammenfällt, die genau die entgegengesetzte Richtung hat, als die das Einstellen auslösende Nick- oder Rollbewegung. Auch dieses kann ein verstärktes Blenden des Fahrzeugführers des entgegenkommenden oder vorausfahrenden Fahrzeugs nach sich ziehen.

Ein weiterer Aspekt ist, dass aufgrund der Nick- und Rollbewegungen ständig Stellsignale erzeugt werden, die zu einer ständigen Betätigung der Stellmittel führen. Die Stellmittel werden dadurch über die Maßen beansprucht. Dieses kann sich auf die Lebensdauer der Stellmittel auswirken.

Neben der Steuerung der Hell-Dunkel-Grenze zur Entblendung von anderen Verkehrsteilnehmern, bei der die anderen Verkehrsteilnehmer durch Bilderfassungs- und Bildverarbeitungsmittel erfasst werden, ist aus dem Dokument DE 196 53 662 A1 eine Vorrichtung und ein Verfahren bekannt, bei dem eine Hell-Dunkel-Grenze zur Entblendung von anderen Verkehrsteilnehmern in Abhängigkeit von Beladung des Kraftfahrzeugs eingestellt wird. Dazu wird über Erfassungsmittel die Neigung der Fahzeugkarosse gegenüber dem Fahrwerk ermittelt, die sich je nach Lastverteilung der Zuladung des Kraftfahrzeugs einstellt. Darüber hinaus kann sich die Neigung der Fahrzeugkarosse auch während der Fahrt ändern, zum Beispiel bei Fahrten auf einem rauen Untergrund, insbesondere auf Kopfsteinpflaster. Diese Lageänderungen sind sehr schnell im Vergleich zu einer Lageänderung aufgrund einer geänderten Lastverteilung. Damit diese schnellen Lageänderungen der Fahrzeugkarosse nicht zu einer ständigen Änderung der Hell-Dunkel-Grenze führt, ist bei der Vorrichtung gemäß dem Dokument DE 196 53 662 A1 ein Mittel vorgesehen, welches die Lageänderungen aufgrund eines rauen Straßenbelags von der Beeinflussung der Hell-Dunkel-Grenze ausschließt.

Eine Möglichkeit die Hell-Dunkel-Grenze in Abhängigkeit von der Position von Leuchten eines anderen Verkehrsteilnehmers einzustellen ist in dem Dokument DE 196 53 662 A1 hingegen nicht offenbart.

Hier setzt die vorliegende Erfindung an.

Der vorliegenden Erfindung liegt die Aufgabe zugrunde, ein verstärktes Blenden von Fahrzeugführern von vorausfahrenden oder entgegenkommenden Fahrzeugen bei unebenen Fahrbahnbelägen zu unterbinden und eine dauerhafte Betätigung der Stellmittel bei solchen Fahrbahnbelägen zu vermeiden.

Diese Aufgabe wird erfindungsgemäß dadurch gelöst, dass die Anordnung zwei Erkennungsmittel aufweist, die geeignet und eingerichtet sind, Nick- und/oder Rollbewegungen des Kraftfahrzeugs zumindest aufgrund eines schlechten Fahrbahnzustands zu erkennen, und geeignet und eingerichtet sind, je ein erstes Signal zu erzeugen, mit welchem das Auftreten der Nick- und/oder Rollbewegungen anzeigbar ist. Ein erstes Erkennungsmittel ist Teil des Bilderfassungs- und Bildverarbeitungsmittels und ein zweites Erken-nungsmittel umfasst einen Achssensor, der zum Erfassen des Federwegs der Räder geeignet und eingerichtet ist. Durch eine erfindungsgemäße Anordnung zum Steuern oder Regeln kann also das Auftreten von Nick- oder Rollbewegungen aufgrund eines schlechten Fahrbahnzustands erkannt werden. Dieses macht es möglich, in den Steuer- oder Regelalgorithmen der erfindungsgemäßen Anordnung das Auftreten der Fahrbahnunebenheiten zu berücksichtigen, um das Blenden des Verkehrs zu vermeiden und eine Überbeanspruchung der Stellmittel zu unterbinden.

Gemäß der Erfindung kann das Steuer- und/oder Regelmittel geeignet und eingerichtet sein, das erste Signal zu verarbeiten. Es ist beispielsweise möglich, dass das Steuer- oder Regelmittel in Abhängigkeit des ersten Signals Stellsignale für das Stellmittel erzeugt. Das Steuer- oder Regelmittel einer erfindungsgemäßen Regelanordnung kann ein Element zum Unterdrücken aufweisen. Dieses Element zum Unterdrücken unterdrückt im Falle der Anzeige der Bewegung durch das erste Signal bei der Erzeugung der Stellsignale einen Ausgleich der Nick- und/oder Rollbewegung durch eine Veränderung der Hell-Dunkel-Grenze. Die Stellsignale berücksichtigen somit nicht, dass aufgrund der Nick- oder Rollbewegungen eine Veränderung der Darstellung der Orte der Lichtquellen in den von dem Bilderfassungs- und Bildverarbeitungsmittel aufgenommenen und verarbeiteten Bildern erkannt wird. Die Hell-Dunkel-Grenze wird nicht verändert, wenn Nick- oder Rollbewegungen erkannt werden. Ein Ausgleich der Nick- oder Rollbewegungen wird bei der Erzeugung der Stellsignale unterdrückt. Das kann bedeuten, dass keine Stellsignale zur Veränderung der Hell-Dunkel-Grenze erzeugt werden. In jedem Fall wird kein Stellsignal erzeugt, welches die Hell-Dunkel-Grenze verändert, das allein auf den Ausgleich der Nick- oder Rollbewegung zurückzuführen wäre.

Eine erfindungsgemäße Steuer- und Regelanordnung kann Mittel zur quantitativen Erfassung der Roll- und/oder Nickbewegung aufweisen. Die Erfassungsmittel und die Erkennungsmittel können durch gleiche Baugruppen gebildet werden.

Die Erfassungsmittel oder das Steuer- und/oder Regelmittel können Elemente zum Ermitteln eines Grades der Nickbewegung und/oder der Rollbewegung umfassen, wobei aus dem ermittelten Grad die Stärke der Nick- oder Rollbewegung ablesbar ist.

Das Element zum Unterdrücken, welches von der dem Mittel zum Steuern oder Regeln umfasst ist, kann dafür Sorge tragen, dass bis zu einem vorgegebenen Grad der Nick- und/oder Rollbewegung, d. h. bis zu einer vorgegebenen Stärke der Nick- und/oder Rollbewegung bei der Erzeugung der Stellsignale ein Ausgleich der Nick- oder Rollbewegung durch Veränderung der Hell-/Dunkelgrenze beziehungsweise durch eine Veränderung der Einstellung des Scheinwerfers unterdrückt wird. Wird dieser Grad überschritten, liegen also extreme Nick- oder Rollbewegungen vor, kann gleichwohl ein Ausgleich erfolgen.

Anhand der beigefügten Zeichnung wird die Erfindung nachfolgend näher erläutert. Dabei zeigt:

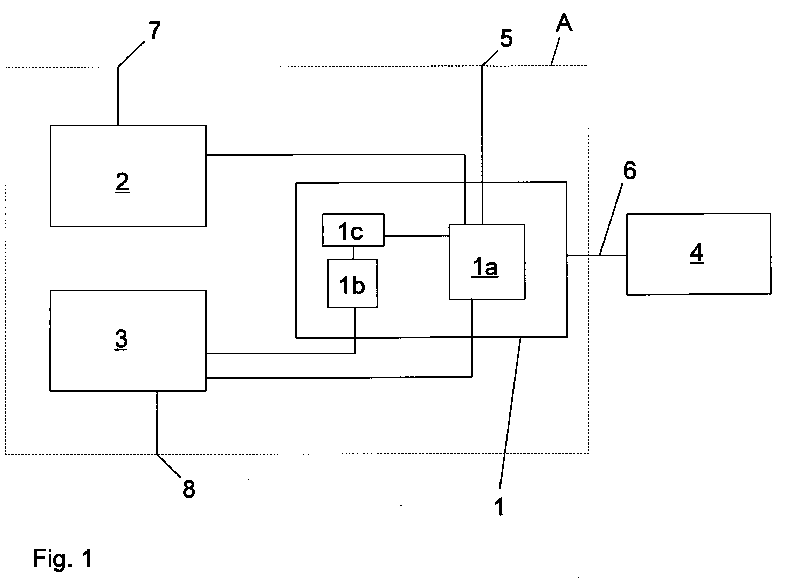

- Fig. 1: ein Blockschaltbild einer erfindungsgemäßen Steuer- und/oder Regelanordnung.

Die in der Fig. 1 dargestellte Steuer- und/oder Regelanordnung A ist zur Erzeugung von Stellsignalen vorgesehen, die über eine Schnittstelle 6 an ein Stellmittel zum Einstellen der Hell-/Dunkelgrenze eines Kraftfahrzeugscheinwerfers verbunden ist. In dem Steuer- und Regelmittel können in Abhängigkeit von verschiedenen Sensordaten und aufgrund der vorgegebenen Steuerungs- beziehungsweise Regelungsalgorithmen die Stellsignale erzeugt werden. Aufgrund der Stellsignale kann das Stellmittel die Hell-Dunkel-Grenze der Kraftfahrzeugscheinwerfer so einstellen, dass weder ein Fahrzeugführer eines vorausfahrenden Fahrzeugs, noch der eines entgegenkommenden Fahrzeugs geblendet wird und zugleich eine optimale Ausleuchtung der Fahrbahn gewährleistet ist.

Aufgrund von Bodenunebenheiten in der Fahrbahn, zum Beispiel begründet durch einen schlechten Fahrbahnzustand kann das Fahrzeug Nick- und Rollbewegungen ausführen. Diese Nick- und Rollbewegungen führen dazu, dass sich die Positionen der von dem Bilderfassungs- und Bildverarbeitungsmittel erfassten Gegenstände in den erzeugten Bildern verändert. So kann sich insbesondere auch die Position eines Scheinwerfers eines entgegenkommenden Fahrzeugs oder die Position einer Rückleuchte eines vorausfahrenden Fahrzeugs verändern. Die Veränderung der Position einer Lichtquelle entspricht bei Abwesenheit eines Nickens oder Rollens des Fahrzeugs einer Änderung des Abstands zwischen dem Fahrzeug und der Lichtquelle. Bei Steuer- und/oder Regelanordnungen gemäß dem Stand der Technik führt dies dazu, dass die Nick- und Rollbewegungen kompensiert werden, d. h., die Steuer- und Regelanordnung reagiert auf die Nick- und Rollbewegungen durch ein Stellsignal, welches die Hell-Dunkel-Grenze entgegen der Nick- oder Rollbewegung verschiebt. Dieses führt insbesondere bei einem schlechten Fahrbahnzustand zu einem ständigen Verschieben der Hell-Dunkel-Grenze, d. h. zur ständigen Erzeugung von Stellsignalen und zur ständigen Ausführung dieser Stellsignale durch die Stellmittel. Die Stellmittel müssen für eine derartige intensive Beanspruchung ausgelegt sein.

Bei der erfindungsgemäßen Anordnung zum Steuern oder Regeln der Hell-/Dunkelgrenze, wie es in der Fig. 1 dargestellt ist, sind dagegen zwei Erkennungsmittel 2, 3 vorgesehen, die die Nick- und/oder Rollbewegung des Kraftfahrzeugs bei einem schlechten Fahrbahnzustand erkennen. Die Erkennungsmittel 2, 3 können ein erstes Signal erzeugen, mit welchem das Auftreten des Nickens und/oder Rollens angezeigt werden kann. Alternativ ist es möglich, dass die Erkennungsmittel 2, 3 nicht jedes für sich die Nick- und/oder Rollbewegung des Kraftfahrzeugs erkennt, sondern den Erkennungsmitteln 2, 3 ein gemeinsames Element zugeordnet ist, welches aufgrund von Informationen beider Erkennungsmittel 2, 3 das erste Signal erzeugt, welches das Auftreten der Nick- und/oder Rollbewegung anzeigt.

Die Signale der Erkennungsmittel 2, 3 werden einem Steuer- oder Regelmittel 1 zugeführt, das in einem Bereich 1a die Stellsignale für die Stellmittel 4 erzeugt. Die Signale der Erkennungsmittel können ferner über Schnittstellen 7, 8 auch von außen abgreifbar sein.

Eines der Erkennungsmittel, nämlich das Erkennungsmittel 3 ist zugleich ein Erfassungsmittel zur quantitativen Erfassung der Nick- und/oder Rollbewegung. Bei dem Mittel 3 handelt es sich um Achssensoren, welche den Federweg der Räder beim Überfahren von Unebenheiten in der Fahrbahn erfassen. Das kombinierte Erkennungs- und Erfassungsmittel 3 gibt Signale über den Federweg der Räder an ein Element 1b des Steuer- und Regelmittels 1.

Das Element 1b ist geeignet und eingerichtet, den Grad der Nickbewegung und/oder der Rollbewegung zu ermitteln, so dass aus dem ermittelten Grad die Stärke der Nick- und/oder Rollbewegung abgelesen werden kann. Der ermittelte Grad der Stärke der Nick- und/oder Rollbewegung wird von dem Element 1b an ein Element 1c des Steuer- und Regelmittels gegeben. Solange der Grad der Nick- und/oder Rollbewegung ein vorgegebenes Maß nicht übersteigt, sorgt dieses Element 1c dafür, dass bei der Erzeugung der Stellsignale ein Ausgleich der Nick- und/oder Rollbewegung durch Veränderung der Hell-Dunkel-Grenze, so wie es beim Stand der Technik üblich ist, unterdrückt wird. Die Hell-Dunkel-Grenze wird dann aufgrund der Nick- und Rollbewegung nicht verändert. Die Stellmittel 4 erhalten über die Schnittstelle 6 keine Stellsignale vom Steuer- und Regelmittel 1. Dieses führt dann dazu, dass die Veränderung der Position der Lichtquellen im Bild des Bilderfassungs- und Bildverarbeitungsmittel unausgeglichen bleibt. Erst wenn der Grad der Nick- und/oder Rollbewegung das vorgegebene Maß überschreitet, unterbleibt die Unterdrückung des Ausgleichs der Nick- und/oder Rollbewegung und die Hell-Dunkel-Grenze wird verändert.

### Bezugszeichenliste

- 1: Steuer- und Regelmittel
- 1a: Bereich
- 1 b: Element zum Ermitteln
- 1c: Element zum Unterdrücken
- 2: Bilderfassungs- und Verarbeitungssystem
- 3: Erkennungs- und Erfassungsmittel
- 4: Stellmittel
- 6: Schnittstelle
- 7: Schnittstelle
- 8: Schnittstelle

## Patentansprüche

1. Anordnung (A) zum Steuern und/oder Regeln der Hell-Dunkel-Grenze bei Kraftfahrzeugscheinwerfern mit mindestens einem Bilderfassungs- und Bildverarbeitungsmittel (2), das zum Aufnehmen eines Bildes einer vor dem Fahrzeug liegenden Verkehrssituation, nämlich der Beleuchtungssituation einschließlich der Scheinwerfer von entgegenkommenden und der Rückleuchten vorrausfahrender Fahrzeuge, geeignet und eingerichtet ist, und mit einem Steuer- und/oder Regelmittel (1), das in Abhängigkeit der Bildaufnahme zum Erzeugen von Stellsignalen an ein Stellmittel (4) zum Einstellen der Hell-Dunkel-Grenze des Kraftfahrzeugscheinwerfers geeignet und eingerichtet ist,
**dadurch gekennzeichnet,**
**dass** die Anordnung mindestens zwei Erkennungsmittel (2, 3) aufweist, die geeignet und eingerichtet sind, Nick- und/oder Rollbewegungen des Kraftfahrzeugs zumindest aufgrund eines schlechten Fahrbahnzustands zu erkennen, und geeignet und eingerichtet sind, je ein erstes Signal zu erzeugen, mit welchem das Auftreten der Nick- und/oder Rollbewegungen anzeigbar ist, dass ein erstes Erkennungsmittel (2) Teil des Bilderfassungs- und Bildverarbeitungsmittels ist und dass ein zweites Erkennungsmittel (3) mindestens einen Achssensor umfasst, der zum Erfassen des Federwegs der Räder geeignet und eingerichtet ist.

2. Steuer- und/oder Regelanordnung (A) nach Anspruch 1, **dadurch gekennzeichnet, dass** das Steuer- und/oder Regelmittel (1) geeignet und eingerichtet ist, die ersten Signale zu verarbeiten.

3. Steuer- und/oder Regelanordnung (A) nach Anspruch 2, **dadurch gekennzeichnet, dass** das Steuer- und/oder Regelmittel (1) geeignet und eingerichtet ist, in Abhängigkeit der ersten Signale Stellsignale für das Stellmittel (4) zu erzeugen.

4. Steuer- und/oder Regelanordnung (A) nach Anspruch 3, **dadurch gekennzeichnet, dass** das Steuer- und/oder Regelmittel (1) ein Element (1c) zum Unterdrücken aufweist, das geeignet und eingerichtet ist, im Falle der Anzeige einer Nick- und/oder Rollbewegung durch eines der ersten Signale bei der Erzeugung der Stellsignale einen Ausgleich der Nick- und/oder Rollbewegung durch eine Veränderung der Hell-Dunkel-Grenze zu unterdrücken.

5. Steuer- und/oder Regelanordnung (A) nach einem der Ansprüche 1 bis 4, **dadurch gekennzeichnet, dass** Achssensoren (3) zur quantitativen Erfassung der Nick- und/oder Rollbewegungen geeignet und eingerichtet sind.

6. Steuer- und/oder Regelanordnung nach Anspruch 5, **dadurch gekennzeichnet, dass** die Achssensoren (3) oder das Steuer- und/oder Regelmittel (1) Elemente (1b) zum Ermitteln eines Grades der Nickbewegung und/oder Rollbewegung umfassen, wobei aus dem ermittelten Grad die Stärke der Nick- und/oder Rollbewegung ablesbar ist.

7. Steuer- und/oder Regelanordnung (A) nach Anspruch 6, **dadurch gekennzeichnet, dass** das Element (1c) zum Unterdrücken geeignet und eingerichtet ist, bis zu einem vorgegebenen Grad der Nick- und/oder Rollbewegung, d. h. bis zu einer vorgegebenen Stärke der Nick- und/oder Rollbewegung, bei der Erzeugung der Stellsignale den Ausgleich der Nick- und/oder Rollbewegung durch Veränderung der Hell-Dunkel-Grenze zu unterdrücken.

## Claims

1. Arrangement (A) for controlling and/or regulating the cut-off line for motor vehicle headlamps with at least one means of image recording and image processing (2) that is suitable and configured to record an image of a traffic situation ahead of the vehicle, namely the lighting situation including the headlamps of oncoming vehicles and the rear lights of preceding vehicles and with a means of controlling and regulating (1) that depending on the image captured is suitable and configured to generate control signals to a setting mechanism (4) to set the cut-off line of the motor vehicle headlamp, **characterized in that** the arrangement has at least two means of recognition (2, 3) that are suitable and configured to recognize pitching and/or rolling movements of the motor vehicle caused by a poor condition of the road surface and are each suitable and configured to generate a first signal by means of which the pitching and/or rolling movements are displayable, **in that** a first means of recognition (2) is part of the means of image recording and image processing and **in that** a second means of recognition (3) comprises at least one axis sensor that is suitable and configured to record the spring deflection of the wheels.

2. Controlling and/or regulating arrangement (A) according to Claim 1, **characterized in that** the means of controlling and/or regulating (1) is suitable and configured to process the first signals.

3. Controlling and/or regulating arrangement (A) according to Claim 2, **characterized in that** the means of controlling and/or regulating (1) is suitable and configured to generate control signals for the setting mechanism (4).

4. Controlling and/or regulating arrangement (A) according to Claim 3, **characterized in that** the means of controlling and/or regulating (1) has an element (1c) for suppression that is suitable and configured in the event of a pitching and/or rolling movement being indicated by one of the first signals in the generation of the control signals to suppress a balancing out of the pitching and/or rolling movement by adjusting the cut-off line.

5. Controlling and/or regulating arrangement (A) according to one of the Claims 1 through 4, **characterized in that** axis sensors are suitable and configured for recording the quantity of the pitching and/or rolling movements.

6. Controlling and/or regulating arrangement according to Claim 5, **characterized in that** the axis sensors (3) or the means of controlling and/or regulating (1) comprises elements (1b) for determining the extent of the pitching movement and/or rolling movement, where the intensity of the pitching and/or rolling movement can be read from the extent determined.

7. Controlling and/or regulating arrangement (A) according to Claim 6, **characterized in that** the element (1c) is suitable and configured to suppress up to a specified extent of the pitching and/or rolling movement, i.e. up to a specified intensity of the pitching and/or rolling movement, to suppress the balancing out of the pitching and/or rolling movement by adjusting the cut-off line in the generation of the control signals.

## Revendications

1. Installation (A) de commande et/ou de régulation de la limite entre la zone claire et la zone sombre des projecteurs de véhicules automobiles, comportant au moins un dispositif d'acquisition et de traitement d'images (2) pouvant être utilisé et configuré pour acquérir une image de la circulation, et plus précisément de la situation d'éclairage, devant le véhicule, y compris les projecteurs des véhicules arrivant en sens inverse et les feux arrière des véhicules le précédant, ainsi qu'un dispositif de commande et/ou de régulation (1) adapté et configuré pour générer des signaux de commande en fonction de l'image enregistrée et les envoyer vers un dispositif de réglage (4) afin de régler la limite entre la zone claire et la zone sombre du projecteur du véhicule automobile ; **caractéristique est le fait que** l'installation comporte au moins deux dispositifs de détection (2, 3) adaptés et configurés pour détecter des mouvements de tangage et/ou de roulis du véhicule automobile au moins sur la base du mauvais état de la chaussée et générer chacun un premier signal indiquant l'apparition des mouvements de tangage et/ou de roulis, le premier dispositif de détection (2) faisant partie du dispositif d'acquisition et de traitement d'images et le second dispositif de détection (3) comportant au moins un capteur d'essieu adapté et configuré pour détecter la course du ressort de la suspension des roues.

2. Installation de commande et/ou de régulation (A) selon la revendication 1, **caractérisée par le fait que** le dispositif de commande et/ou de régulation (1) est adapté et configuré pour traiter les premiers signaux.

3. Installation de commande et/ou de régulation (A) selon la revendication 2, **caractérisée par le fait que** le dispositif de commande et/ou de régulation (1) est adapté et configuré pour générer des signaux de commande pour le dispositif de réglage (4) sur la base des premiers signaux.

4. Installation de commande et/ou de régulation (A) selon la revendication 3, **caractérisée par le fait que** le dispositif de commande et/ou de régulation (1) comporte un élément (1c) d'inhibition adapté et configuré pour inhiber la compensation du mouvement de tangage et/ou de roulis par une modification de la limite entre la zone claire et la zone sombre lors de la génération des signaux de réglage en cas de détection d'un mouvement de tangage et/ou de roulis indiquée par l'un des premiers signaux.

5. Installation de commande et/ou de régulation (A) selon l'une des revendications 1 à 4, **caractérisée par le fait que** des capteurs d'essieu sont adaptés et configurés pour la détection quantitative des mouvements de tangage et/ou de roulis.

6. Installation de commande et/ou de régulation selon la revendication 5, **caractérisée par le fait que** les capteurs d'essieu (3) ou le dispositif de commande et/ou de régulation (1) comportent des éléments (1b) permettant de déterminer le degré du mouvement de tangage et/ou de roulement, celui-ci permettant à son tour de déterminer l'ampleur du mouvement de tangage et/ou de roulis.

7. Installation de commande et/ou de régulation (A) selon la revendication 6, **caractérisée par le fait que** l'élément (1c) est adapté et configuré pour inhiber le mouvement de tangage et/ou de roulis jusqu'à un degré prédéfini, c'est-à-dire jusqu'à une ampleur prédéfinie du mouvement de tangage et/ou de roulis en modifiant la limite entre la zone claire et la zone sombre lors de la génération des signaux de réglage.
